Europäisches Patentamt

European Patent Office

Office européen des brevets

(11) Veröffentlichungsnummer: **0 359 093**

**A2**

## EUROPÄISCHE PATENTANMELDUNG

(21) Anmeldenummer: 89116350.3

(22) Anmeldetag: 05.09.89

(51) Int. Cl.⁵ **H04N 9/80**

(30) Priorität: 14.09.88 DE 3831240

(43) Veröffentlichungstag der Anmeldung:
21.03.90 Patentblatt 90/12

(84) Benannte Vertragsstaaten:
AT BE CH DE ES FR GB GR IT LI LU NL SE

(71) Anmelder: Deutsche Thomson-Brandt GmbH
Hermann-Schwer-Strasse 3 Postfach 1307
D-7730 Villingen-Schwenningen(DE)

(72) Erfinder: Pery, Antoine
11, Rue de l'Epine
F-67000 Strasbourg(FR)

(74) Vertreter: Körner, Peter, Dipl.-Ing.
Deutsche Thomson-Brandt GmbH Patent-
und Lizenzabteilung Göttinger Chaussee 76
D-3000 Hannover 91(DE)

(54) **Demodulator für frequenzmodulierte Bildsignale.**

(57) Bei einem Demodulator für frequenzmodulierte
Bildsignale besteht das Problem, die demodulierten
Signale den nachfolgenden Stufen im Pegel anzupassen. Dies geschieht mit einer Klemmschaltung.
Bei Klemmung mit einer künstlich erzeugten Gleichspannung ist nicht sicher, daß sich das gleiche Nullniveau ergibt, welches ein Farbdifferenzsignal bei
einer einem Nullniveau entsprechenden Frequenz
besitzt.

Die Klemmschaltung wird erfindungsgemäß nur
während der Dauer eines einem Gleichspannungsnullniveau entsprechenden Bildsignal initialisiert, wobei der Signalausgang des Frequenzdemodulators
während der Zeit der Initialisierung mit dem Signaleingang der Klemmschaltung verbunden ist.

Der beschriebene Demodulator ist besonders
zur Demodulation von Farbdifferenzsignalen der
Secam-Norm geeignet.

EP 0 359 093 A2

## Demodulator für frequenzmodulierte Bildsignale

Die Erfindung betrifft einen Demodulator für frequenzmodulierte Bildsignale nach dem Oberbegriff des Anspruchs 1.

Farbdifferenzsignale der Secam-Norm werden frequenzmoduliert auf einem Hilfsträger von ca. 4,4 MHz übertragen. Farbtöne und die damit gekoppelte Farbsättigung entsprechen also einer bestimmten Schwankung des Hilfsträgers um seine Nullfrequenz. Durch Frequenzdemodulation erscheint das Farbdifferenzsignal wieder von seinem Träger befreit. Eine Anpassung des Frequenzdemodulatorausgangs an nachfolgende Schaltungsstufen ist erforderlich, um aus dem Farbdifferenzsignal die richtigen Ansteuersignale für die Videostufen und die Bildröhre zu erhalten. Diese Anpassung besorgt eine Klemmschaltung.

Da ein einmaliger Abgleich der Klemmschaltung keine ausreichende Langzeitstabilität bietet, ist es erforderlich, eine Bezugsspannung, die z.B. einem bestimmten Farbton oder einer bestimmten Farbsättigung entspricht, in vorgegeben Zeitabständen neu zu definieren. Dies geschieht durch "Klemmen" der Schaltung. Dabei wird eine vorgegebene Gleichspannung an den Signaleingang angelegt und die Klemmschaltung über einen Steuereingang initialisiert. Die dann folgenden Werte der Signalspannung werden nun auf den Wert der Gleichspannung als Bezugsniveau bezogen, z.B. aufaddiert.

Bisher wurde bei Demodulatoren für Farbdifferenzsignale der Secam-Norm eine künstliche Gleichspannung verwendet die als Ausgangsspannung am Ausgang des Frequenzdemodulators bei der Nullfrequenz theoretisch auftreten sollte. Diese Gleichspannung wurde dann während des Zeilen- oder Bildwechsels, in der kein Hilfsträger vorhanden ist und in der der Frequenzde modulator deshalb eine Rauschsignal abgibt, in das Farbdifferenzsignal eingegliedert. Tatsächlich besitzt die Ausgangsspannung am Signalausgang des Frequenzdemodulators aber eine Abweichung zu derjenigen Spannung, die hinter einem idealen Demodulator auftreten würde.

Die Ursache hierfür liegt darin, daß ein Frequenzdemodulator nicht nur Signale mit der Differenzfrequenz sondern auch mit der Summe der aktuellen Frequenz und der Referenzfrequenz abgibt. Diese Summenfrequenz, die der Differenzfrequenz überlagert ist, verschiebt die Bezugsline eines realen Gleichrichters und verursacht dadurch einen Spannungsversatz.

Der Erfindung liegt die Aufgabe zugrunde, einen Demodulator der eingangs genannten Art so zu verbessern, daß ein Spannungsversatz bei der Klemmmung und daraus resultierende Farbton- und Farbsättigungsfehler sicher vermieden werden.

Diese Aufgabe wird bei einem Demodulator nach dem Oberbegriff des Anspruchs 1 durch die im kennzeichnenden Teil angegebenen Merkmale gelöst.

Die Erfindung nutzt dabei dasjenige Gleichspannungsnullniveau für die Initialisierung der Klemmschaltung aus, das durch Demodulation der Farbdifferenzsignale während einer begrenzten Zeitspanne innerhalb der Periodendauer einer Bildzeile vorgegeben wird. Dabei werden unvermeidbare Nichtlinearitäten und Fehler des Demodulator automatisch berücksichtigt und kompensiert.

Weiterbildungen der Erfindung und vorteilhafte Ausführungsformen ergeben sich aus den Ansprüchen, der Beschreibung und der Zeichnung, die Ausführungsbeispiele veranschaulicht.

In der Zeichnung zeigen:

Fig. 1 ein Blockschaltbild einer ersten Ausgestaltung der Erfindung,

Fig. 2 den Signalverlauf eines demodulierten Signals am Signalausgang der Schaltung nach Fig. 1,

Fig. 3 eine Weiterbildung der Schaltung nach Fig. 1,

Fig. 4 den Signalverlauf eines demodulierten Signals am Signalausgang der Schaltung nach Fig. 3,

Fig. 5 eine Weiterbildung der Schaltung nach Fig. 3,

Fig. 6 den Signalverlauf eines demodulierten Signals an näher bezeichneten Punkten der Schaltung nach Fig. 5.

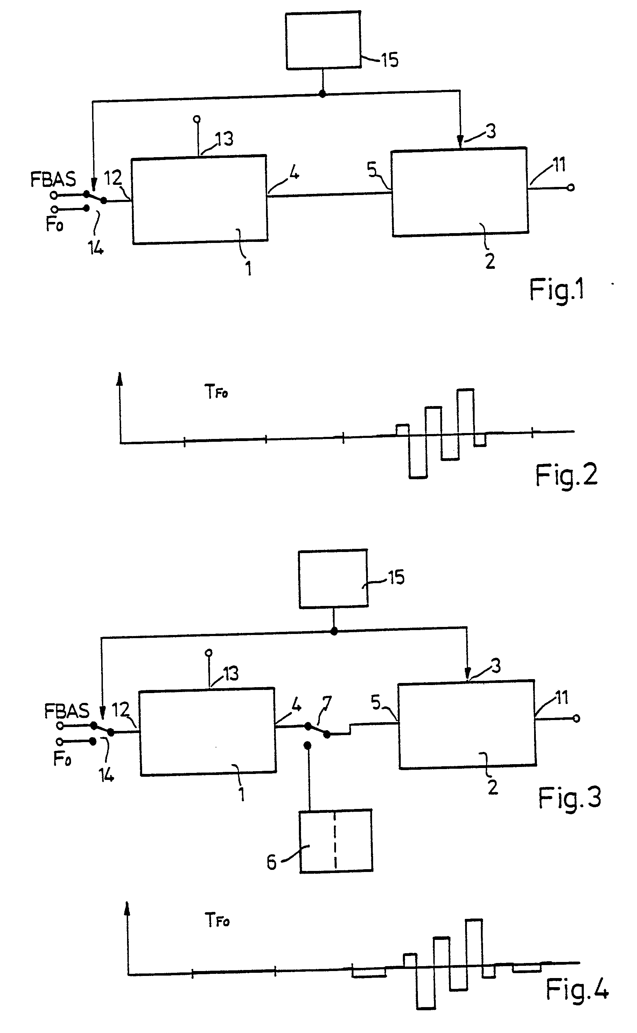

Der in Fig. 1 dargestellte Demodulator umfaßt einen Frequenzdemodulator 1, der mit einer Klemmschaltung 2 verbunden ist. Der Frequenzdemodulator 1 kann z.B. als Koinzidenzdemodulator oder als Mischer ausgebildet sein, an dessen Signaleingang 12 das Farbdifferenzsignal und an dessen Referenzeingang 13 ein Referenzsignal herangeführt wird. Das Referenzsignal schwingt auf einer Nullfrequenz des Farbdifferenzsignals, wobei jedoch die Referenzfrequenz von der Mittenfrequenz abweichen kann, wenn eine unsymmetrische Modulation vorliegt.

Zur Anpassung des Signalausgangs 11 des Frequenzdemodulators 1 an einen Spannungspegel der nachfolgenden Stufen dient eine Klemmschaltung 2. Diese Klemmschaltung 2 läßt sich bei einer bestimmten Eingangsspannung am Signaleingang 5 durch eine an ihren Steuereingang 3 angelegte Steuerspannung initialisieren, also auf eine Bezugsspannung klemmen, worauf die Änderungen des Eingangssignals im Anschluß daran der Bezugsspannung zugeschlagen werden. Ist die bei der

2

Klemmung festgelegte Bezugsspannung falsch, so sind oft alle folgenden Signalspannungen mit diesem Fehler behaftet. In Bezug auf das Farbdifferenzsignal würde dies bedeuten, daß die Farbtöne und die Farbsättigung verfälscht sind. Zur Vermeidung dieses Fehlers wird die Initialisierung der Klemmschaltung deshalb in einem Zeitraum $TF_0$ vorgenommen, in welchem das Farbdifferenzsignal einem Nullniveau entspricht oder ein Signal mit der Frequenz $F_0$ eingespeist wird. Für den letzten Fall ist ein Schalter 14 vorgesehen, der den Signaleingang 12 von FBAS auf $F_0$ umschaltet. Diese Umschaltung sowie die Abgabe der Steuerspannung an den Steuereingang (3) der Klemmschaltung besorgt eine Abgleichschaltung (15).

Fig. 2 zeigt das Ausgangssignal, das nach entsprechender Klemmung zur Ansteuerung der Videoendstufe und der Bildröhre dient.

Da sich mit der Zeit der Gleichspannungspegel verändern kann, insbesondere bei hohen Signalspannungen und durch Leckströme, ist es erforderlich, die Klemmung von Zeit zu Zeit zu wiederholen. Dies geschieht zweckmäßig während des Bildwechsels oder kann auch bei einem Vielfachen eines Bildwechsels z.B. bei jedem vierten Bildwechsel geschehen.

Eine Weiterbildung sieht die Schaltungsanordnung in Fig. 3 vor. Hierbei wird in der Austastlücke, in der kein frequenzmodulierten Farbdifferenzsignal übertragen wird, eine mit einer Gleichspannungsquelle 6 erzeugte Gleichspannung über einen Schalter 7 eingefügt, die aber im Gegensatz zu bekannten Schaltungen nicht zur Klemmung verwendet wird, sondern nur den Zeitraum der Austastlücke überbrücken soll. Der Sinn dieser Maßnahme besteht darin, ein durch Abwesenheit des Farbdifferenzsignals auftretendes starkes Rauschsignal, das zu einer Veränderung des Bezugspotentials der Klemmschaltung 2 führen kann, zu überbrücken.

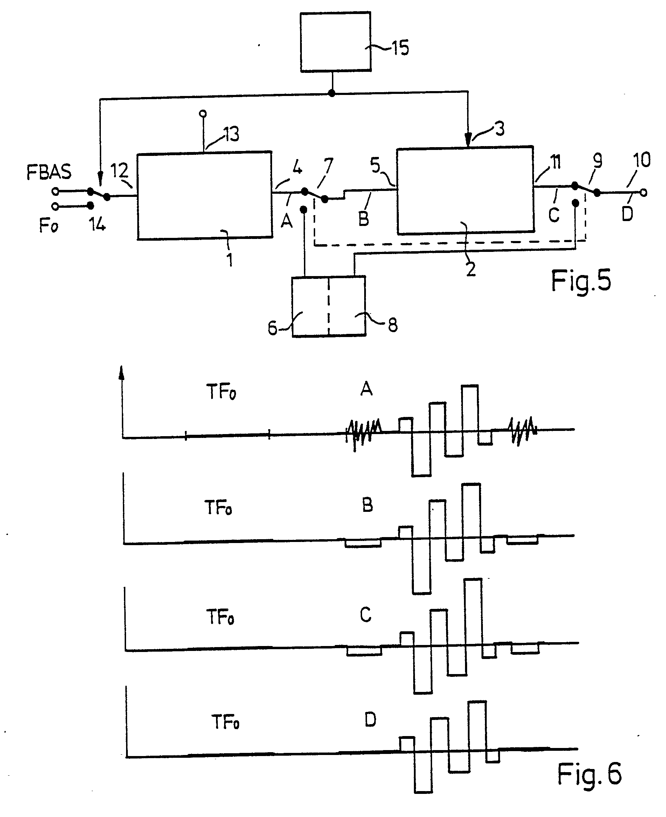

Fig. 4 zeigt das entsprechende Ausgangssignal der Klemmschaltung 2, wobei der Gleichspannungspegel hier willkürlich sein kann. Da er nicht zur Klemmung verwendet wird, führt eine Abweichung dieses Gleichspannungssignals vom Gleichspannungsnullniveau nicht zu einer entsprechenden Veränderung des Pegelniveaus bei der Ansteuerung der Videoendstufe und der Bildröhre.

Schließlich kann auch hinter dem Signalausgang 11 der Klemmschaltung 2 ein solcher Gleichspannungspegel eingeführt werden, wie Fig. 5 erkennen läßt. Bei dieser Ausgestaltung wird mittels einer zweiten Gleichspannungsquelle 8 eine Gleichspannung über einen Schalter 9 auf eine Signalleitung 10 hinter der Klemmschaltung 2 aufgeschaltet, wobei der Signalausgang 11 der Klemmschaltung 2 gleichzeitig von der Signalleitung 10 getrennt wird. Es ist dann möglich, auf der Signalleitung 10 ein solches Gleichspannungsniveau bei der Überbrückung zu erzeugen, das dem Gleichspannungsnullniveau entspricht.

Der Signalverlauf an näher bezeichneten Punkten A, B, C und D der Schaltung in Fig. 5 ist in Fig. 6 dargestellt. Bei A ist innerhalb des Zeitraums der Austastlücke ein Rauschen dargestellt. Bei B wird eine Gleichspannung eingefügt, die vom Gleichspannungsnullniveau abweichen kann und im Beispiel auch abweicht. Bei C ist das sich am Signalausgang 11 der Klemmschaltung 2 ergebende Gleichspannungsniveau während der Austastlücke erkennbar. Schließlich zeigt D den Signalverlauf auf der Signalleitung 10, wobei das Gleichspannungsniveau während der Austastlücke dem Gleichspannungsnullniveau entspricht.

**Ansprüche**

1. Demodulator für frequenzmodulierte Bildsignale, insbesondere Farbdifferenzsignale der Secam-Norm, bestehend aus einem Frequenzdemodulator (1) und einer diesem nachgeschalteten Klemmschaltung (2), welche Ausgangssignale des Frequenzdemodulators (1) einem vorgebbaren Gleichspannungsnullniveau zuordnet und über einen Steuereingang (3) initialisierbar ist, **dadurch gekennzeichnet**, daß die Klemmschaltung (2) nur während der Dauer eines einem Gleichspannungsnullniveau entsprechenden Bildsignal initialisiert wird, wobei der Signalausgang (4) des Frequenzdemodulators (1) während der Zeit der Initialisierung mit dem Signaleingang (5) der Klemmschaltung (2) verbunden ist.

2. Demodulator für Farbdifferenzsignale der Secam-Norm nach Anspruch 1, **dadurch gekennzeichnet**, daß eine erste Gleichspannungsquelle (6) vorgesehen ist, die mittels eines Schalters (7) an den Signaleingang (5) der Klemmschaltung (2) anlegbar ist und daß der Schalter (7) nur während der Dauer des Ausbleibens eines Bildsignals, z.B. während eines Zeilen- oder Bildwechsels geschlossen ist.

3. Demodulator nach Anspruch 1 oder 2, **dadurch gekennzeichnet**, daß eine zweite Gleichspannungsquelle (8) vorgese hen ist, die mittels eines Schalters (9) an eine Signalleitung (10) hinter der Klemmschaltung (2) anlegbar ist, daß der Schalter (9) nur während der Dauer des Ausbleibens eines Bildsignals, z.B. während eines Zeilen- oder Bildwechsels geschlossen ist und daß gleichzeitig der Signalausgang (11) der Klemmschaltung (2) von der Signalleitung (10) unterbrochen ist.

4. Demodulator nach Anspruch 1 oder 2, **dadurch gekennzeichnet**, daß eine Abgleichschaltung (15) vorgesehen ist, mittels der die Demodulatorschaltung in vorgegebenen Intervallen auf eine dem Gleichspannungsnullniveau entsprechende Nullfrequenz abgleichbar ist.

5. Demodulator nach Anspruch 4, **dadurch gekennzeichnet**, daß die Intervalle jeweils 4 Bildwechsel betragen.

Fig.1

Fig.2

Fig.3

Fig.4

Fig.5

Fig. 6